# FASCICULE DE BREVET EUROPEEN

(11) **EP 3 356 206 B1**
(45) Date de publication et mention de la délivrance du brevet: **30.10.2019**
(21) Numéro de dépôt: 16774540.5
(22) Date de dépôt: 15.09.2016
(51) Int. Cl.: B62D 25/20

(54) **PROFILÉ APTE À PERMETTRE LA FIXATION D'ASSISES ET À RENFORCER UNE CAISSE DE VÉHICULE AUTOMOBILE**
ZUR ERMÖGLICHUNG DER BEFESTIGUNG VON SITZEN UND ZUR VERSTÄRKUNG EINER KRAFTFAHRZEUGKAROSSERIE FÄHIGES PROFILELEMENT
PROFILE MEMBER CAPABLE OF ALLOWING THE ATTACHMENT OF SEATS AND OF REINFORCING A MOTOR VEHICLE BODY SHELL

(30) Priorité: 01.10.2015 FR 1559361
(43) Date de publication de la demande: 08.08.2018
(73) Titulaire: PSA AUTOMOBILES S.A., 78300 Poissy (FR)
(72) Inventeur: RICHARD, Olivier, 68130 Wittersdorf (FR); HIGELIN, Vincent, 25200 Montbeliard (FR)
(74) Mandataire: Fernandez, Francis Lionel
(86) Numéro de dépôt international: PCT/FR2016/052328
(87) Numéro de publication internationale: WO 2017/055704

(56) Documents cités:
- DE-A1- 10 313 472
- DE-A1-102007 033 570
- JP-A- S59 137 262

## Description

L'invention a trait au domaine des véhicules automobiles, et plus précisément à la fixation de leurs assises et au renfort de leur caisse.

Un véhicule automobile comprend classiquement une caisse définissant l'ossature du véhicule, sur laquelle sont fixés les organes du véhicule, tels que le moteur ou les assises.

La caisse permet de rigidifier le véhicule lors des différentes phases de vie du véhicule, telles que les accélérations, les freinages ou les chocs entre le véhicule et un objet extérieur au véhicule. La rigidification de la caisse permet la protection des occupants du véhicule.

Afin de rigidifier le véhicule et de protéger les occupants du véhicule lors d'un choc, la caisse comprend généralement :
- des longerons, de profil sensiblement en U, définis par une âme longitudinale et deux parois longitudinales, disposées sensiblement à l'équerre de l'âme longitudinale, les longerons étant disposés suivant la direction générale de déplacement du véhicule, ainsi que
- des traverses, de profil sensiblement en U, définies par une âme transversale et deux parois transversales, disposées sensiblement à l'équerre de l'âme transversale, les traverses étant disposées sensiblement perpendiculairement aux longerons.

Le document DE 103 13 472 A1 décrit une caisse de véhicule automobile selon le préambule de la revendication 1.

Les longerons permettent de reprendre des efforts dus à des chocs, et donc de protéger les occupants du véhicule contre des chocs survenant dans la direction générale de déplacement du véhicule, c'est-à-dire selon une direction longitudinale. Les traverses permettent de reprendre des efforts dus à des chocs, et donc de protéger les occupants du véhicule contre des chocs survenant dans la direction selon laquelle s'étendent les traverses, c'est-à-dire selon une direction transversale.

La caisse, formant l'ossature rigide du véhicule, protège les occupants du véhicule contre des chocs extérieurs, à la condition que les occupants soient solidaires de la caisse, en étant attachés sur une assise solidaire de la caisse.

L'assise peut se présenter sous la forme d'un siège et/ou d'une banquette. Par définition, le siège est destiné à recevoir un unique passager, et la banquette est destinée à recevoir au moins deux passagers.

L'assise est classiquement solidaire des longerons et/ou des traverses de la caisse. Les âmes principales des longerons et les âmes secondaires des traverses comprennent des pattes, aptes à permettre une fixation de l'assise sur la caisse.

Les pattes ont une section sensiblement en U, définie par une âme supérieure et deux parois supérieures, disposées sensiblement à l'équerre de l'âme supérieure. Les parois supérieures sont fixées aux âmes longitudinales des longerons ou aux âmes transversales des traverses, et l'âme supérieure comprend un moyen de fixation de l'assise.

De telles pattes permettent effectivement la fixation des assises à la caisse. Cependant, les pattes, présentes en nombre important, afin d'offrir une fixation de l'assise à différentes positions et une fixation de différents types d'assise, augmentent le poids du véhicule, au détriment de sa consommation. De plus, la fonction unique des pattes, à savoir la fixation de l'assise à la caisse du véhicule, n'offre aucune utilité aux pattes sur lesquelles l'assise n'est pas fixée.

Un premier objectif est de proposer un moyen de fixation d'une assise à une caisse d'un véhicule automobile.

Un deuxième objectif est de proposer un moyen de fixation apte à fixer l'assise à différentes positions.

Un troisième objectif est de proposer un moyen de fixation apte à fixer différents types d'assises.

Un quatrième objectif est de proposer un moyen de fixation apte à renforcer la rigidité de la caisse.

A cet effet, il est proposé, en premier lieu, une caisse de véhicule automobile, comprenant :
- un longeron, ayant un profil transversal sensiblement en U, défini par une âme longitudinale et deux parois longitudinales, disposées sensiblement à l'équerre de l'âme longitudinale, le longeron étant muni d'une lèvre longitudinale principale en saillie de chaque paroi longitudinale, les lèvres longitudinales principales étant disposées à une extrémité longitudinale des parois longitudinales, opposée à l'âme longitudinale, et formant un plan longitudinal principal, sensiblement parallèle à l'âme longitudinale ;
- un passage de roue, muni d'un pan latéral disposé le long du longeron ;
- un plancher, muni de perçages, le plancher étant en appui sur les lèvres longitudinales principales du longeron, de manière sensiblement parallèle au plan longitudinal principal ;
la caisse du véhicule comprenant un profilé muni :
- d'une aile principale, disposée entre le longeron et le plancher, et par laquelle le profilé est solidaire des lèvres longitudinales principales du longeron ;
- d'une aile secondaire, disposée sensiblement à l'équerre de l'aile principale, l'aile secondaire étant parallèle au pan latéral du passage de roue, et par laquelle le profilé est solidaire de celui-ci ;
- des organes de fixation, solidaires de l'aile principale, et disposés au droit des perçages du plancher.

Les organes de fixation du profilé permettent la fixation d'une assise à la caisse du véhicule, selon différentes positions. Les organes de fixation permettent également de fixer différents types d'assises à la caisse.

L'aile principale et l'aile secondaire, disposée sensiblement à l'équerre de l'aile principale du profilé, sont aptes à rigidifier le longeron, le passage de roue, et le plancher auxquels le profilé est solidaire.

Les organes de fixation non utilisés par une assise étant compris dans le profilé ne représentent plus une masse non utilisée, puisqu'ils participent à la rigidification de la caisse.

Diverses caractéristiques supplémentaires peuvent être prévues, seules ou en combinaison :
- les organes de fixation sont disposés linéairement, au centre de l'aile principale ;
- chaque organe de fixation comprend une lumière ;
- chaque organe de fixation comprend un écrou, inséré dans la lumière ;
- l'écrou et l'aile principale du profilé sont soudés ;
- l'écrou et l'aile principale du profilé sont sertis ;
- l'aile principale du profilé comprend des ouvertures ;
- les ouvertures sont intercalées entre les organes de fixation ;
- les ouvertures ont une forme sensiblement rectangulaire.

Il est proposé, en second lieu, un véhicule automobile comprenant une caisse telle que précédemment décrite.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue schématique en perspective d'un véhicule automobile comprenant une caisse ;
- la figure 2 est une vue schématique éclatée de la caisse du véhicule ;
- la figure 3 est une vue schématique en perspective de la caisse sans plancher ;
- la figure 4 est une vue schématique en perspective de la caisse vue en coupe.

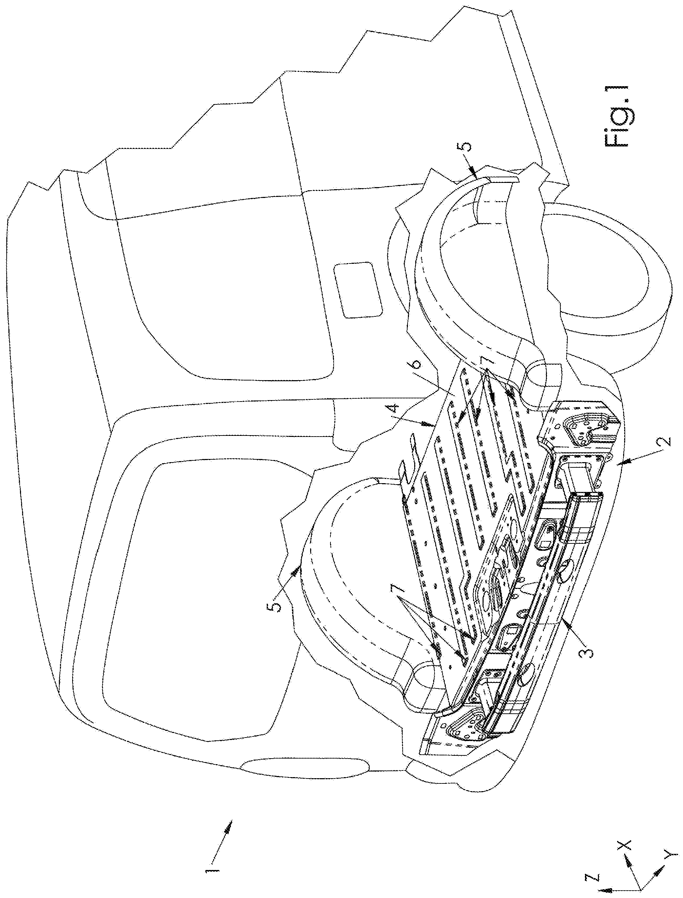

Sur la figure 1 est représenté un véhicule **1** automobile comprenant une caisse **2** munie d'une partie **3** arrière, d'un plancher **4** et de deux passages **5** de roue solidaires du plancher **4.**

Le plancher **4** comprend un panneau **6** pourvu de nervures **7** de rigidification, sensiblement rectangulaire et complémentaire à la partie 3 arrière de la caisse **2.**

On définit par rapport au véhicule **1** un repère orthogonal XYZ comprenant trois axes perpendiculaires deux à deux, à savoir :
- un axe X, définissant une direction longitudinale, horizontale, confondue avec la direction générale de déplacement du véhicule 1,
- un axe Y, définissant une direction transversale, horizontale, qui avec l'axe X définit un plan XY horizontal, et
- un axe Z, définissant une direction verticale, perpendiculaire au plan XY horizontal.

Dans la suite de ce texte, on définit par le terme :
- longitudinal, toute pièce ou partie d'une pièce s'étendant sensiblement suivant l'axe X ;
- transversal, toute pièce ou partie d'une pièce s'étendant sensiblement suivant l'axe Y.

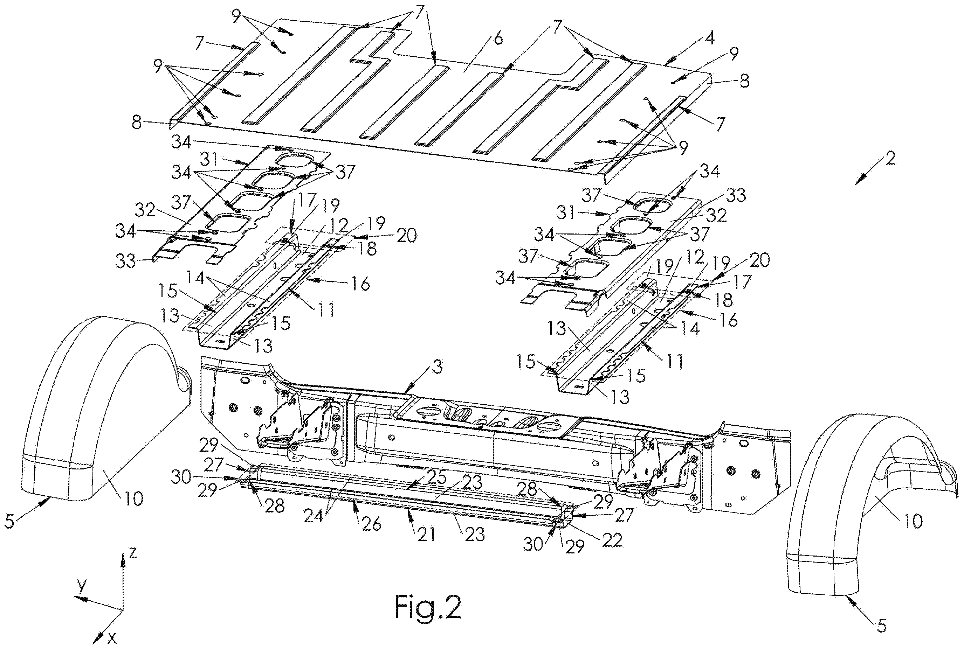

Comme illustré sur la figure 2, le plancher **4** de la caisse **2** comprend deux ailes **8** intermédiaires, disposées sensiblement à l'équerre du panneau **6** et des perçages **9.**

Les passages **5** de roue comprennent chacun un pan **10** latéral.

La caisse **2** comprend deux longerons **11** s'étendant sensiblement suivant l'axe X. Les longerons **11** ont un profil sensiblement en U, défini par une âme **12** longitudinale et deux parois **13** longitudinales, disposées sensiblement à l'équerre de l'âme **12** longitudinale. Le longeron **11** est muni de lèvres **14** longitudinales principales, en saillie de chaque paroi **13** longitudinale. Les lèvres **14** longitudinales principales sont disposées à une extrémité **15** longitudinale des parois **13** longitudinales, opposée à l'âme **12** longitudinale. Les lèvres **14** longitudinales principales forment un plan **16** longitudinal principal, sensiblement parallèle à l'âme **12** longitudinale.

Les longerons **11** comprennent également une tête **17** longitudinale, disposée à une limite **18** longitudinale du longeron **11.** La tête **17** longitudinale est pourvue de lèvres **19** longitudinales secondaires, formant un plan **20** longitudinal secondaire, sensiblement parallèle au plan **16** longitudinal principal, et disposé au-dessus, par rapport à l'axe Z, de celui-ci.

La caisse **2** comprend une traverse **21** s'étendant sensiblement suivant l'axe Y. La traverse **21** a un profil sensiblement en U, défini par une âme **22** transversale et deux parois **23** transversales, disposées sensiblement à l'équerre de l'âme **22** transversale. La traverse **21** est munie d'une lèvre **24** transversale principale, en saillie de chaque paroi **23** transversale. Les lèvres **24** transversales principales sont disposées à une extrémité **25** transversale des parois **23** transversales, opposée à l'âme **22** transversale. Les lèvres **24** transversales principales forment un plan **26** transversal principal, sensiblement parallèle à l'âme **22** transversale.

La traverse **21** comprend également une tête **27** transversale, disposée à chaque limite **28** transversale de la traverse **21** et apte à solidariser la traverse **21** et une lèvre **14** longitudinale principale de chaque longeron **11.** La tête **27** transversale est pourvue de lèvres **29** transversales secondaires, formant un plan **30** transversal secondaire, sensiblement parallèle au plan **26** transversal principal, et disposé au-dessous, par rapport à l'axe Z, de celui-ci.

Selon des modes différents de réalisation, la caisse **2** comprend plusieurs traverses **21.** Le nombre des traverses **21** est choisi en fonction de la raideur désirée de la caisse **2.**

La caisse **2** comprend également deux profilés **31,** munis chacun d'une aile **32** principale et d'une aile **33** secondaire, disposée sensiblement à l'équerre de l'aile **32** principale.

Dans le mode de réalisation représenté, l'aile **32** principale comprend six organes **34** de fixation, aptes à être disposés au droit des perçages **9** du plancher **4.** Les organes **34** de fixation sont aptes à solidariser la caisse **2** et une assise (non représentée).

Les organes **34** de fixation comprennent chacun une lumière **35** dans laquelle est inséré un écrou **36** permettant la fixation de l'assise. Les écrous **36** et l'aile **32** principale du profilé **31** peuvent être soudés ou sertis.

Selon le mode de réalisation représenté, cinq organes **34** de fixation sont disposés linéairement, au centre de l'aile **32** principale.

Dans le mode de réalisation représenté, l'aile **32** principale comprend quatre ouvertures **37** de forme sensiblement rectangulaire. Les ouvertures **37** sont disposées linéairement, au centre de l'aile **32** principale.

Trois ouvertures **37** sont intercalées entre quatre des cinq organes **34** de fixation alignés. La quatrième ouverture **37** est intercalée entre un des cinq organes **34** de fixation alignés, et le sixième organe **34** de fixation non aligné avec les cinq autres.

Le nombre et le positionnement des organes **34** de fixation et des ouvertures **37** est défini en fonction du type d'assise apte à être fixée à la caisse **2** et en fonction des possibilités de positionnement de ces assises.

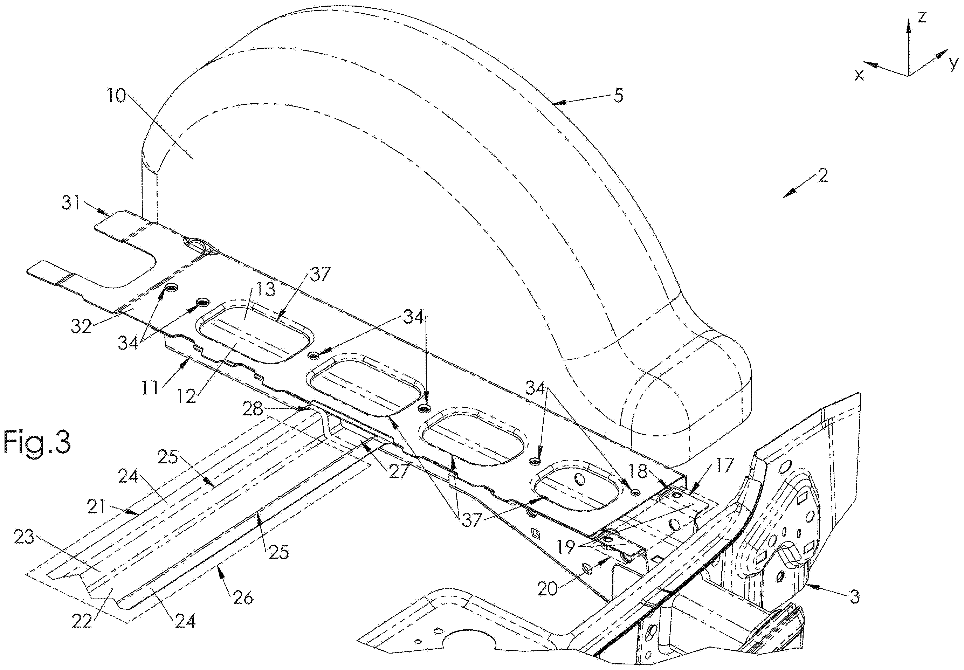

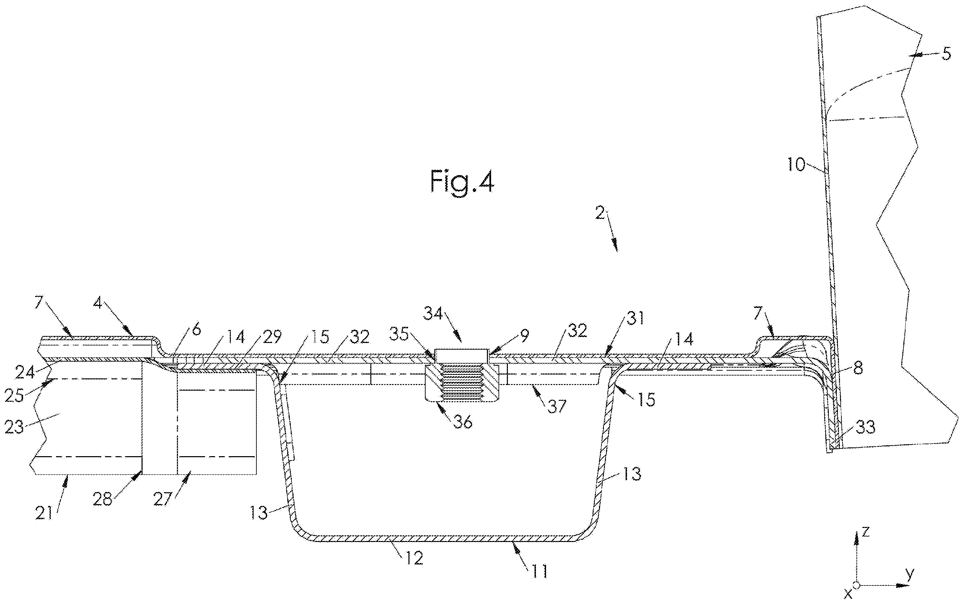

Comme représenté sur les figures 3 et 4, la limite **18** longitudinale des longerons **11** est solidaire de la partie **3** arrière de la caisse **2.**

La traverse **21** est disposée entre les longerons **11,** de telle sorte que les têtes **27** transversales de la traverse **21** soient fixées sous une des lèvres **14** longitudinales principales de chaque longeron **11.**

Les profilés **31** sont disposés sur chaque longeron **11,** de telle sorte que l'aile **32** principale des profilés **31** soit fixée sur les lèvres **14** longitudinales principales des longerons **11.** Les ailes **33** secondaires des profilés **31** sont disposées à l'opposé de la traverse **21,** par rapport aux longerons **11.**

Les plans **20** longitudinaux secondaires, définis par les lèvres **19** longitudinales secondaires des longerons **11,** et le plan **26** transversal principal, défini par les lèvres **24** transversales principales de la traverse **21,** sont confondus avec des plans définis par les ailes **32** principales des profilés **31.**

Le panneau **6** du plancher **4** est fixé par-dessus les longerons 11, la traverse **21** et les profilés **31.**

Les ailes **33** secondaires des profilés **31** sont solidaires des ailes **8** intermédiaires du plancher **4.**

Les passages **5** de roue sont disposés le long du plancher **4.** Le pan **10** latéral de chaque passage **5** de roue est solidaire de chaque aile **8** intermédiaire du plancher **4.**

Avantageusement, la partie **3** arrière, le plancher **4,** les passages **5** de roue, les longerons **11,** la traverse **21** et les profilés **31** de la caisse **2** du véhicule **1** sont soudés les uns aux autres.

Les organes **34** de fixation du profilé **31** permettent la fixation de l'assise à la caisse **2** du véhicule **1,** selon différentes positions. Les organes **34** de fixation permettent également de fixer différents types d'assises à la caisse **2.**

L'aile **32** principale et l'aile **33** secondaire disposée sensiblement à l'équerre de l'aile **32** principale du profilé **31,** sont aptes à rigidifier le plancher **4,** le passage **5** de roue et le longeron **11** auxquels le profilé **31** est solidaire.

Les organes 34 de fixation non utilisés par une assise étant compris dans le profilé **31,** ne représentent plus une masse non utilisée, puisqu'ils participent à la rigidification de la caisse **2.**

Les ouvertures **37** du profilé **31** permettent une diminution du poids du véhicule **1,** et donc une baisse de la consommation de celui-ci.

La forme générale du profilé **31** ainsi que la disposition et la forme des lumières **35** et des ouvertures **37** font du profilé **31** une pièce facile et rapide à fabriquer et à adapter sur différents types de véhicules **1.**

## Revendications

1. Caisse **(2)** de véhicule **(1)** automobile, comprenant :
- un longeron **(11)** ayant un profil transversal sensiblement en U, défini par une âme **(12)** longitudinale et deux parois **(13)** longitudinales, disposées sensiblement à l'équerre de l'âme **(12)** longitudinale, le longeron **(11)** étant muni d'une lèvre **(14)** longitudinale principale, en saillie de chaque paroi **(13)** longitudinale, les lèvres **(14)** longitudinales principales étant disposées à une extrémité **(15)** longitudinale des parois **(13)** longitudinales, opposée à l'âme **(12)** longitudinale, et formant un plan **(16)** longitudinal principal, sensiblement parallèle à l'âme **(12)** longitudinale ;
- un passage **(5)** de roue, muni d'un pan **(10)** latéral disposé le long du longeron **(11)** ;
- un plancher **(4),** muni de perçages **(9),** le plancher **(4)** étant en appui sur les lèvres **(14)** longitudinales principales du longeron **(11),** de manière sensiblement parallèle au plan **(16)** longitudinal principal ;
la caisse **(2)** du véhicule (1) étant **caractérisée en ce qu'**elle comprend un profilé **(31)** muni :
- d'une aile **(32)** principale, disposée entre le longeron **(11)** et le plancher **(4),** et par laquelle le profilé **(31)** est solidaire des lèvres **(14)** longitudinales principales du longeron **(11)** ;
- d'une aile **(33)** secondaire, disposée sensiblement à l'équerre de l'aile **(32)** principale, l'aile **(33)** secondaire étant parallèle au pan **(10)** latéral du passage **(5)** de roue, et par laquelle le profilé **(31)** est solidaire de celui-ci ;
- des organes **(34)** de fixation, solidaires de l'aile **(32)** principale et disposés au droit des perçages **(9)** du plancher **(4).**

2. Caisse **(2)** selon la revendication 1, **caractérisée en ce que** les organes **(34)** de fixation sont disposés linéairement, au centre de l'aile **(32)** principale.

3. Caisse **(2)** selon l'une quelconque des revendications précédentes, **caractérisée en ce que** chaque organe **(34)** de fixation comprend une lumière **(35).**

4. Caisse **(2)** selon la revendication 3, **caractérisée en ce que** chaque organe **(34)** de fixation comprend un écrou **(36)** inséré dans la lumière **(35).**

5. Caisse **(2)** selon la revendication 4, **caractérisée en ce que** l'écrou **(36)** et l'aile **(32)** principale du profilé **(31)** sont soudés.

6. Caisse **(2)** selon la revendication 4, **caractérisée en ce que** l'écrou **(36)** et l'aile **(32)** principale du profilé **(31)** sont sertis.

7. Caisse **(2)** selon l'une quelconque des revendications précédentes, **caractérisée en ce que** l'aile **(32)** principale du profilé (31) comprend des ouvertures **(37).**

8. Caisse **(2)** selon la revendication 7, **caractérisée en ce que** les ouvertures **(37)** sont intercalées entre les organes **(34)** de fixation.

9. Caisse **(2)** selon l'une quelconque des revendications 7ou 8, **caractérisée en ce que** les ouvertures **(37)** ont une forme sensiblement rectangulaire.

10. Véhicule **(1)** automobile comprenant une caisse **(2)** selon l'une quelconque des revendications précédentes.

## Patentansprüche

1. Karosserie (2) eines Kraftfahrzeugs (1), die Folgendes umfasst:
- einen Längsträger (11), der ein Querprofil im Wesentlichen in U aufweist, das durch eine Längsseele (12) und zwei Längswände (13) definiert ist, die im Wesentlichen rechtwinkelig zu der Längsseele (12) angeordnet sind, wobei der Längsträger (11) mit einer Längshauptlippe (14) versehen ist, die von jeder Längswand (13) vorragt, wobei die Längshauptlippen (14) an einem Längsende (15) der Längswände (13), der Längsseele (12) entgegengesetzt angeordnet sind und eine Hauptlängsebene (16), die zu der Längsseele (12) im Wesentlichen parallel ist, bilden;
- einen Radlauf (5), der mit einer Seitenbahn (10) versehen ist, die entlang des Längsträgers (11) angeordnet ist;
- einen Fußboden (4), der mit Bohrungen (9) versehen ist, wobei der Fußboden (4) auf den Längshauptlippen (14) des Längsträgers (11) im Wesentlichen parallel zu der Hauptlängsebene (16) aufliegt;
wobei die Karosserie (2) des Fahrzeugs (1) **dadurch gekennzeichnet ist, dass** sie ein Profil (31) umfasst, das mit Folgendem versehen ist:
- einem Hauptflügel (32), der zwischen dem Längsträger (11) und dem Fußboden (4) angeordnet ist, und durch den das Profil (31) fest mit den Längshauptlippen (14) des Längsträgers (11) verbunden ist;
- einem Nebenflügel (33), der im Wesentlichen im rechten Winkel zu dem Hauptflügel (32) angeordnet ist, wobei der Nebenflügel (33) zu der Seitenbahn (10) des Radlaufs (5) parallel ist, und durch den das Profil (31) mit diesem fest verbunden ist;
- Befestigungsorganen (34), die fest mit dem Hauptflügel (32) verbunden und im rechten Winkel zu den Bohrungen (9) des Fußbodens (4) angeordnet sind.

2. Karosserie (2) nach Anspruch 1, **dadurch gekennzeichnet, dass** die Befestigungsorgane (34) linear in der Mitte des Hauptflügels (32) angeordnet sind.

3. Karosserie (2) nach einem der vorstehenden Ansprüche, **dadurch gekennzeichnet, dass** jedes Befestigungsorgan (34) ein Langloch (35) umfasst.

4. Karosserie (2) nach Anspruch 3, **dadurch gekennzeichnet, dass** jedes Befestigungsorgan (34) eine Mutter (36), die in das Langloch (35) eingefügt ist, umfasst.

5. Karosserie (2) nach Anspruch 4, **dadurch gekennzeichnet, dass** die Mutter (36) und der Hauptflügel (32) des Profils (31) geschweißt sind.

6. Karosserie (2) nach Anspruch 4, **dadurch gekennzeichnet, dass** die Mutter (36) und der Hauptflügel (32) des Profils (31) gefalzt sind.

7. Karosserie (2) nach einem der vorstehenden Ansprüche, **dadurch gekennzeichnet, dass** der Hauptflügel (32) des Profils (31) Öffnungen (37) umfasst.

8. Karosserie (2) nach Anspruch 7, **dadurch gekennzeichnet, dass** die Öffnungen (37) zwischen den Befestigungsorganen (34) eingefügt sind.

9. Karosserie (2) nach einem der Ansprüche 7 oder 8, **dadurch gekennzeichnet, dass** die Öffnungen (37) eine im Wesentlichen rechteckige Form aufweisen.

10. Kraftfahrzeug (1), das eine Karosserie (2) nach einem der vorstehenden Ansprüche umfasst.

## Claims

1. A body shell (2) of a motor vehicle (1), including:
- a side rail (11) having a substantially U-shaped transverse profile, defined by a longitudinal core (12) and two longitudinal walls (13), disposed substantially at a right angle to the longitudinal core (12), the side rail (11) being provided with main longitudinal lip (14), projecting from each longitudinal wall (13), the main longitudinal lips (14) being disposed at a longitudinal end (15) of the longitudinal walls (13), opposite the longitudinal core (12), and forming a main longitudinal plane (16), substantially parallel to the longitudinal core (12) ;
- a wheel arch (5), provided with a lateral panel (10) disposed along the side rail (11);
- a floor (4), provided with bores (9), the floor (4) resting on the main longitudinal lips (14) of the side rail (11), in a manner substantially parallel to the main longitudinal plane (16);
the body shell (2) of the vehicle (1) being **characterized in that** it includes a profile (31) provided:
- with a main wing (32), disposed between the side rail (11) and the floor (4), and by which the profile (31) is integral with the main longitudinal lips (14) of the side rail (11);
- with a secondary wing (33), disposed substantially at a right angle to the main wing (32), the secondary wing (33) being parallel to the lateral panel (10) of the wheel arch (5), and by which the profile (31) is integral therewith;
- with attachment members (34), integral with the main wing (32) and disposed perpendicular to the bores (9) of the floor (4).

2. The body shell (2) according to Claim 1, **characterized in that** the attachment members (34) are disposed linearly, at the centre of the main wing (32).

3. The body shell (2) according to any one of the preceding claims, **characterized in that** each attachment member (34) includes a slot (35).

4. The body shell (2) according to Claim 3, **characterized in that** each attachment member (34) includes a nut (36) inserted in the slot (35).

5. The body shell (2) according to Claim 4, **characterized in that** the nut (36) and the main wing (32) of the profile (31) are welded.

6. The body shell (2) according to Claim 4, **characterized in that** the nut (36) and the main wing (32) of the profile (31) are crimped.

7. The body shell (2) according to any one of the preceding claims, **characterized in that** the main wing (32) of the profile (31) includes openings (37).

8. The body shell (2) according to Claim 7, **characterized in that** the openings (37) are intercalated between the attachment members (34).

9. The body shell (2) according to any one of Claims 7 or 8, **characterized in that** the openings (37) have a substantially rectangular shape.

10. A motor vehicle (1) including a body shell (2) according to any one of the preceding claims.
